# EUROPEAN PATENT APPLICATION

(11) **EP 0 796 695 A1**
(43) Date of publication of application: **24.09.1997**
(21) Application number: 97200859.3
(22) Date of filing: 21.03.1997
(51) Int. Cl.: B23K 26/00

(54) **Method and apparatus for drilling holes in solid material by laser beam irradiation**

(30) Priority: 23.03.1996 GB 9606191
(71) Applicant: BRITISH AEROSPACE PUBLIC LIMITED COMPANY, Farnborough, Hants. GU14 6YU (GB)
(72) Inventor: Williams, Stewart Wynn, British Aerospace plc, Filton, Bristol BS12 7QW (GB); Marsden, Paul Joseph,, Filton, Bristol BS12 7 QW (GB)
(74) Representative: Rooney, Paul Blaise

(57) **Abstract**

A hole may be drilled in solid material (1) such as a metal or ceramic by laser beam irradiation from a laser source such as an excimer laser (2) or a Nd.YAG laser (3) in an improved manner by heating at least the area being drilled of the material (1) to at least 25 degrees C above ambient temperature. This enables a hole with a larger exit diameter to be drilled for a specific laser pulse power than conventionally.

## Description

This invention relates to a method and apparatus for drilling a hole in solid material by laser beam irradiation, particularly, but not exclusively, suitable for drilling micro holes in aluminium and titanium metal and alloy aircraft wing and tail fin leading edges so as to improve laminar flow therearound to reduce drag.

To provide effective drag reduction for aircraft it is necessary to drill large arrays of typically 50 micron diameter holes in at least one millimetre thick aluminium and titanium alloys. Proposed laser drilling techniques using an excimer laser have proved difficult to implement in aluminium and titanium alloys due to a very slow drilling rate. This is because to achieve the required exit hole diameters of 50 microns in 1mm thick titanium requires 5mJ (millijoules) of laser energy per hole. This limits the number of holes that can be drilled in parallel by one laser. Proposed laser drilling techniques using a Nd-YAG laser have similar restricted drilling rate problems.

There is thus a need for a method and apparatus for drilling a hole in solid material by laser beam irradiation which at least minimises the foregoing problems and which offers the chance of drilling suitable diameter holes in a practical time and at a practical cost for industrial application.

According to one aspect of the present invention there is provided a method for drilling a hole in solid material by laser beam irradiation, characterised in that at least the area to be drilled of the solid material is heated to a temperature of at least 25 degrees C above ambient temperature and a beam of pulsed laser radiation is impinged on to the heated solid material to drill a hole therethrough by ablation and/or vaporisation of the material, with the laser pulse energy necessary to produce a desired exit hole size being proportional to the temperature to which the solid material is heated.

Preferably the exit hole size drilled for a fixed laser pulse energy increases with increasing temperature to which the solid material being drilled is heated.

Conveniently at least the volume of the solid material being drilled is heated by electrical induction.

Advantageously at least the volume of the solid material being drilled is heated by an oven, directly electrically and/or by thermal radiation.

Preferably the solid material to be drilled is metallic or inorganic such as a metal or ceramic and preferably aluminium or titanium metal or alloy.

Conveniently the laser beam irradiation is provided by an excimer laser or by a Nd.YAG laser.

According to a further aspect of the present invention there is provided apparatus for drilling a hole in solid material by laser beam irradiation, characterised by including a source of laser beam irradiation, means for impinging a beam of pulsed laser radiation onto a solid material to be drilled, a locating device for removably holding said solid material, and means for heating at least the volume to be drilled of the solid material to a temperature of at least 25 degrees C above ambient temperature.

Preferably the source of laser beam irradiation is an excimer laser or a Nd.YAG laser.

Conveniently the means for heating at least the volume to be drilled of the solid material is an electrical induction heater including an electromagnetic induction coil locatable adjacent to the solid material.

Advantageously the means for heating at least the volume to be drilled of the solid material includes an oven, a direct electrical heating device and/or a source of thermal radiation.

Preferably the locating device comprises metal and ceramic blocks and clamps whereby the solid material to be drilled is held removably in thermal and electrical insulation.

Conveniently the apparatus includes means for dispersing and/or collecting waste drilling material produced on the laser impingement side of the solid material during drilling.

Advantageously the means for dispersing and/or collecting waste drilling material includes means for blowing a jet of gaseous medium under pressure across the solid material in the vicinity of the volume thereof being drilled and means for collecting and extracting waste drilling material entrained in such gaseous medium jet.

Preferably the apparatus includes means for monitoring the temperature of at least the volume of the solid material to be or being drilled.

For a better understanding of the present invention, and to show how the same may be carried into effect, reference will now be made, by way of example, to the accompanying drawings in which:
Figure 1 is a diagrammatic view of apparatus according to one embodiment of the present invention utilising an excimer laser, for carrying out the method according to the present invention for drilling one or more holes in solid material by laser beam irradiation,
Figure 2 is a diagrammatic view of apparatus according to a second embodiment of the present invention utilising a Nd.YAG laser for carrying out the method of the present invention,
Figure 3 is a graphical representation of hole diameter in microns against pulse laser energy showing plots of hole drilling in titanium and aluminium by techniques not according to the present invention,
Figure 4 is a plot of average exit hole diameter in microns against relative temperature of material being drilled according to the present invention where the material is aluminium,
Figure 5 is a graphical representation of drilled hole diameter in microns against laser pulse energy for the method of the present invention on 1mm thick aluminium at two different aluminium temperatures,
Figure 6 is a plot of average drilled hole diameter in microns against relative temperature of the material being drilled according to the method of the present invention where the material being drilled is 1mm thick aluminium sheet.

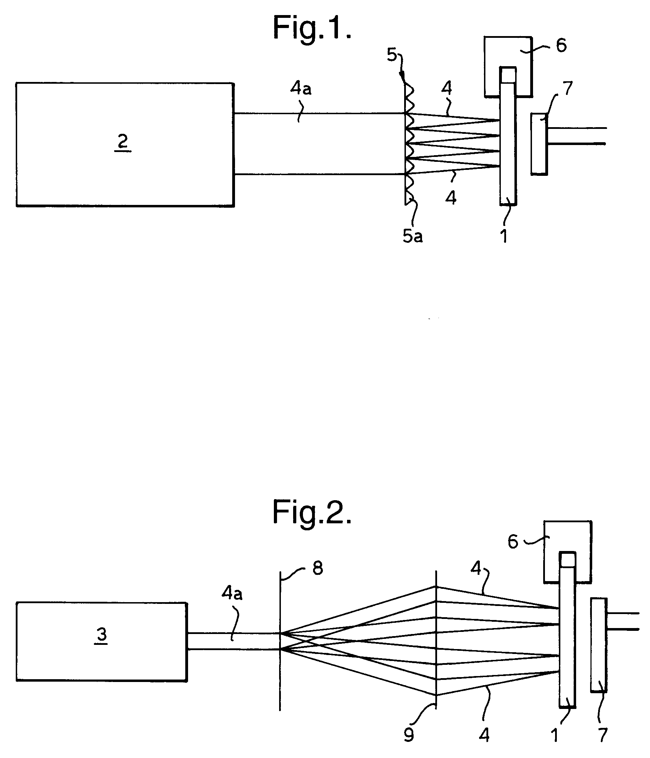

According to the method of the present invention one or more holes can be drilled in solid material 1 such as metallic or inorganic material, preferably metal or metal alloy such as titanium or aluminium or a ceramic by laser beam irradiation from a laser such as copper vapour, ruby or other solid state lasers, CO₂ lasers, or an excimer laser 2 as shown in apparatus according to a first embodiment of the invention in Figure 1 of the accompanying drawings or a Nd.YAG laser 3 as shown in apparatus according to the a second embodiment of the present invention in Figure 2 of the accompanying drawings. In the method of the present invention at least the volume to be drilled of the solid material 1 is heated to a temperature of at least 25 degrees C above ambient temperature and beamlets 4 of pulsed laser radiation are impinged on the heated solid material 1 to drill holes therethrough by ablation and/or vaporisation of the material, with the laser energy fluence value necessary to produce a desired drilled exit hole size being proportional to the temperature to which the solid material is heated. If desired a single beam 4 only may be employed to drill a single hole at a time. With the method of the present invention exit hole size drilled for a fixed laser fluence value increases with increasing temperature to which the solid material being drilled is heated.

As shown in Figure 1 of the accompanying drawings a low divergence output beam 4a is incident upon a micro lens array 5 having lenslets 5a from which the beam is transmitted as beamlets 4a to the material 1. The components 5 and 5a form means for impinging the beam of pulsed laser radiation onto the solid material 1. Also forming part of the apparatus according to the invention is a locating device 6 for removably holding the solid material 1 and means for heating at least the volume to be drilled of the solid material 1 to a temperature of at least 25 degrees C above ambient temperature.

The locating device 6 comprises metal and ceramic blocks and clamps which may be provided at least partially by the blocks, whereby the solid material 1 to be drilled is held removably in thermal and electrical insulation. The means for heating at least the volume to be drilled of the solid material 1 is an electrical induction heater including an electromagnetic induction coil 7 locatable adjacent to the solid material 1 and operable to induce a current at RF frequencies to flow inside the material 1 which is preferably metal. This causes rapid heating of the metal skin with the closer the coil 7 is to the surface of the material 1, the better the electromotive coupling and the higher the surface skin temperature of the material for the same settings. An induction heater operating at 1kw maximum power can induce a current of several amps and a few hundred volts to flow within the metal material 1. Optionally the temperature of the material may be monitored by temperature monitoring means such as a thermocouple (not shown) attached to the edge of the material 1.

Alternatively the means for heating at least the volume to be drilled of the solid material 1 could be an oven, a direct electrical heating device and/or a source of thermal radiation. Additionally the apparatus according to the invention may include means for dispersing and/or collecting waste drilling material produced on the laser impingement side of the solid material 1 during drilling. Conveniently this dispersing means includes means for blowing a jet of gaseous material under pressure across the solid material 1 in the vicinity of the volume thereof being drilled and means for collecting and extracting waste drilling material entrained in the jet. The gaseous material may be compressed air and it can be blown across the surface of the lens array 5 closest to the material 1 to protect the lens array from waste material blown out of the holes during drilling. The means 6 holding the material 1 preferably is capable of a stepping motion in an X-Y direction to move the material 1 stepwise after each successive hole has been drilled. Conveniently the wavelength of the excimer laser 2 is 308nm from a laser having an Xecl operating gas

The apparatus according to a first embodiment of the invention as shown in Figure 1 is intended for drilling 50 micron diameter holes in parallel. The array 5 conveniently has 20 lenslets 5a operable to drill up to twenty holes in parallel. If desired the apparatus may be utilised to drill single holes at a time. However the number of lenslets and consequent number of holes drilled is dependent upon the output laser pulse energy and on the pulse energy per hole requirements.

In apparatus according to the second embodiment of the present invention as illustrated in Figure 2 the laser source 3 is a Nd.YAG laser. In Figure 2 items similar of identical to those of Figure 1 will be given like reference numbers and not referred to in detail hereinafter. A suitable laser operates at a wavelength of 1064nm, a pulse energy of 180mJ, a pulse rate of less than 50 Hz and a pulse length of 100µs. A collimated low divergence beam 4a from the pulsed laser source 3 is incident via a two dimensional or single dimensional beam splitter 8 upon a focusing head lens 9. The beam splitter 8 splits the beam 4a into a number of beamlets which are focused by the lens 9 as beamlets 4 onto the material 1 being drilled. The beam splitter 8 may be omitted if the apparatus is only required to drill single holes at a time. The apparatus may also include waste drilling material dispersing and/or collecting means as described in connection with the Figure 1 embodiment and includes the locating device 6 and heating equipment in the form of the induction coil 7.

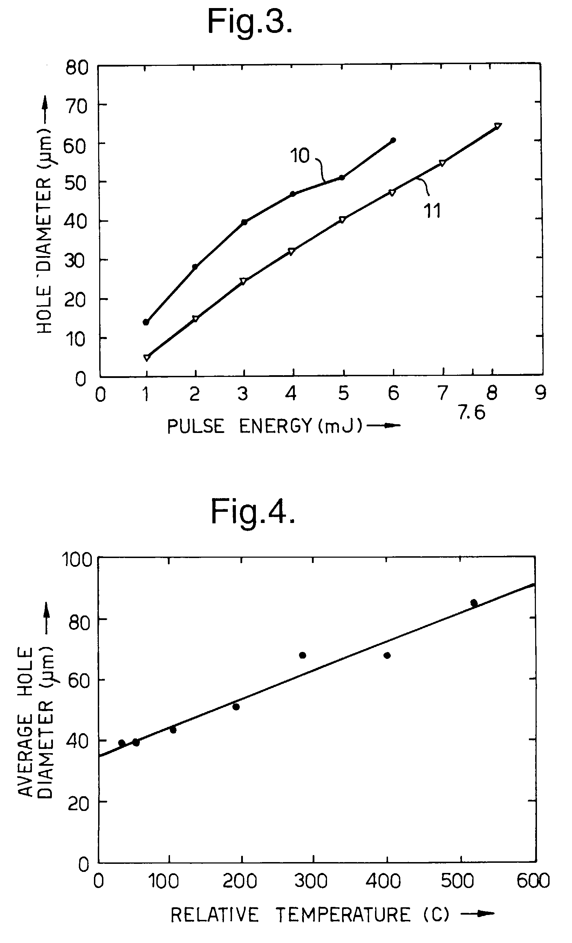

Running the apparatus of Figure 1 without use of the means for heating at least the volume to be drilled of the solid material 1 and using an excimer laser operating at 308 manometers enabled holes of up to 60µm in diameter to be drilled in titanium and aluminium, as shown in Figure 3, but this required a high pulse energy. Thus in Figure 3 which plots the hole diameter in microns against the pulse energy in millijoules for a 1.2mm thick sample of titanium as shown by curve 10 a pulse energy of 6 millijoules is required and for a 1.6 mm thick sample of aluminium as shown by the curve 11 to produce a hole diameter of 60 microns necessitates a pulse energy of 7.8 millijoules. The exit hole diameter drilled is therefore highly dependent on the laser pulse energy which considerably limits the number of holes that can be drilled conventionally at any one time. Similar results were achievable with the apparatus of Figure 2 in the absence of solid material heating but required a much higher pulse energy as the hole was drilled with a single pulse.

Heating the material 1 at least in the volume to be drilled to a temperature of at least 25 degrees C above ambient temperature according to the present invention enables an increase in exit hole size in the material 1 and a reduction in laser pulse energy requirements to be achieved. Reference to Figure 4 of the accompanying drawings shows that for excimer laser drilling at a wavelength of 308 manometers, pulse frequency of 10Hz and a pulse energy of 4.2mJ for aluminium having a thickness of 1.6mm, the size of exit hole producable for a fixed pulse energy was directly proportional to the temperature of the material 1 being drilled and enabled an exit hole diameter of 40 microns to be produced at 25 degrees C to be increased up to a hole diameter of 85 microns at a temperature of 525 degrees C. As the melting point of aluminium is 660 degrees C it is clearly not advisable to heat the material too closely to this temperature. However, the amount of RF power needed to heat aluminium close to its melting point is relatively low and with good thermal conductivity there is a uniform distribution of temperature across the material 1.

Comparison between the results of Figures 3 and 4 shows that for the curve 11 in Figure 3 a pulse energy of 4.2mJ produced a maximum exit hole diameter being drilled of about 35 microns in diameter and that this could be increased up to about 80 microns in diameter merely by heating the material 1 being drilled. According to conventional techniques the production of an 80 micron diameter exit hole by laser drilling through 1.6mm aluminium sheet at room temperature would require a pulse energy of about 10mJ which shows that the method according to the present invention produces an improvement in drilling rate and efficiency of more than 100 percent.

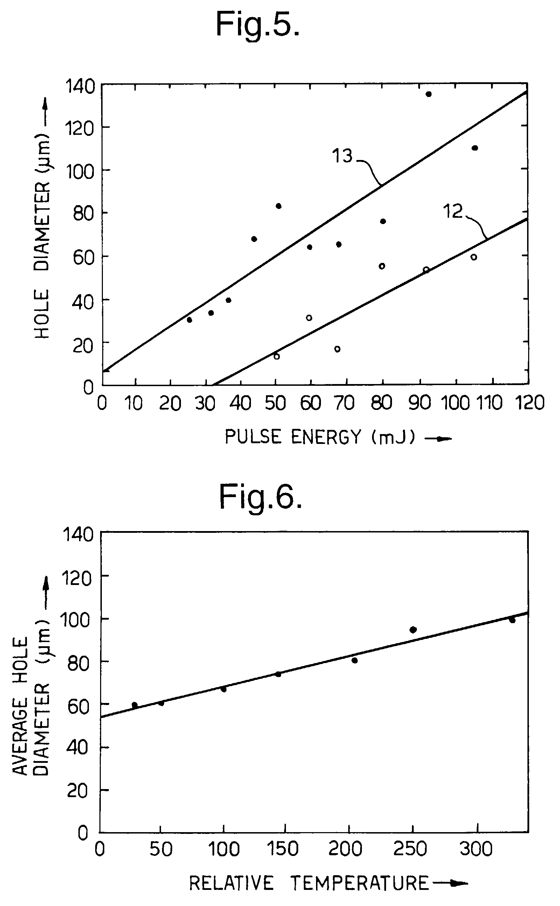

Using the apparatus of Figure 2 with a Nd.YAG laser for 1mm thick aluminium sheet produced the results of Figure 5 in which curve 12 was produced at 25 degrees centigrade and curve 13 at 325 degrees centigrade. At the higher temperature of 325 degrees centigrade larger diameter holes may be drilled with the same laser pulse energy or alternatively a hole of the same diameter can be drilled at roughly half the laser pulse energy. The rate of change of diameter with temperature is similar to the excimer laser results. For example looking at Figure 6 which is a plot of the average hole diameter in microns against relative temperature for drilling 1mm thick aluminium for one pulse at 105mJ it can be seen that there is an approximate linear relationship between temperature of heating and average hole diameter. At about 25 degrees C a hole diameter of 60 microns was achievable which improved to a diameter of about 100 microns for temperatures of about 325 degrees C to 350 degrees C.

The method and apparatus of the present invention can be used additionally for drilling titanium metal or alloy although the poor thermal conductivity and high melting point of titanium do not make this material particularly suitable. A large input of RF power is needed to heat the material close to its melting point of 1670 degrees C and a non-uniform temperature distribution is achievable because of the relatively poor thermal conduction properties of this material. Nevertheless titanium material can be drilled using the method and apparatus of the present invention. The induction heating technique of the apparatus of Figures 1 and 2 is specifically suitable for metals and metallic materials being drilled but non-metallic materials such as ceramics can be drilled using different heating techniques such as an oven, direct electrical heating or direct thermal radiation sources.
Additionally the apparatus of Figures 1 and 2 can include energy monitoring and stabilising devices, beam profile monitoring devices, beam shaping devices and beam movement devices as are conventionally available.

## Claims

1. A method for drilling a hole in solid material (1) by laser beam irradiation, characterised in that at least the area to be drilled of the solid material (1) is heated to a temperature of at least 25 degrees C above ambient temperature and a beam (4) of pulsed laser radiation is impinged on to the heated solid material to drill a hole therethrough by ablation and/or vaporisation of the material, with the laser pulse energy necessary to produce a desired drilled exit hole size being proportional to the temperature to which the solid material (1) is heated.

2. A method according to claim 1, in which the exit hole size drilled for a fixed laser pulse energy increases with increasing temperature to which the solid material (1) being drilled is heated.

3. A method according to claim 1 or claim 2, in which at least the volume of the solid material (1) being drilled is heated by electrical induction.

4. A method according to claim 1 or claim 2, in which at least the volume of the solid material (1) being drilled is heated by an oven, directly electrically and/or by thermal radiation.

5. A method according to any one of claims 1 to 4, in which the solid material to be drilled is metallic or inorganic.

6. A method according to claim 5 in which the solid material to be drilled is metal or ceramic.

7. A method according to any one of claims 1 to 6, in which the laser beam irradiation is provided by an excimer laser or by a Nd.YAG laser.

8. A method according to any one of claims 1 to 7, in which the solid material (1) to be drilled is titanium or aluminium.

9. Apparatus for drilling a hole in solid material (1) by laser beam irradiation, characterised by including a source (2,3) of laser beam irradiation, means (5,5a) for impinging a beam (4) of pulsed laser radiation on to a solid material (1) to be drilled, a locating device (6) for removably holding said solid material (1), and means (7) for heating at least the volume to be drilled of the solid material to a temperature of at least 25 degrees C above ambient temperature.

10. Apparatus according to claim 9, wherein the source of laser beam irradiation is an excimer laser (2) or a Nd.YAG laser (3).

11. Apparatus according to claim 9 or claim 10, wherein the means for heating at least the volume to be drilled of the solid material (1) is an electrical induction heater including an electromagnetic induction coil (7) locatable adjacent the solid material (1).

12. Apparatus according to claim 9 or claim 10, wherein the means for heating at least the volume to be drilled of the solid material includes an oven, a direct electrical heating device and/or a source of thermal radiation.

13. Apparatus according to any one of claims 9 to 12, wherein the locating device (6) comprises metal and ceramic blocks and clamps whereby the solid material to be drilled is holdable removably in thermal and electrical insulation.

14. Apparatus according to any one of claims 9 to 13, including means for dispersing and/or collecting waste drilling material produced on the laser impingement side of the solid material during drilling.

15. Apparatus according to claim 14, wherein said means for dispersing and/or collecting waste drilling material includes means for blowing a jet of gaseous medium under pressure across the solid material in the vicinity of the volume thereof being drilled and means for collecting and extracting waste drilling material entrained in said gaseous medium jet.

16. Apparatus according to any one of claims 9 to 15, including means for monitoring the temperature of at least the volume of the solid material to be or being drilled.
